Europäisches Patentamt

European Patent Office

Office européen des brevets

(11) Veröffentlichungsnummer: **0 299 367**
**A1**

## EUROPÄISCHE PATENTANMELDUNG

(21) Anmeldenummer: 88110901.1

(22) Anmeldetag: 08.07.88

(51) Int. Cl.⁴ **B01J 20/32 , B01D 53/02**

(30) Priorität: 17.07.87 DE 3723687

(43) Veröffentlichungstag der Anmeldung:
**18.01.89 Patentblatt 89/03**

(84) Benannte Vertragsstaaten:
**BE DE FR GB IT NL**

(71) Anmelder: **BASF Aktiengesellschaft**
**Carl-Bosch-Strasse 38**
**D-6700 Ludwigshafen(DE)**

(72) Erfinder: **Haas, Franz, Dr.**
**Mohnstrasse 17**
**D-6700 Ludwigshafen(DE)**
Erfinder: **Schreyer, Gerold**
**Ungsteiner Strasse 6**
**D-6700 Ludwigshafen(DE)**

(54) **Verfahren zum Verfestigen der Oberflächen von körnigen Adsorbentien.**

㊺ Diese Erfindung betrifft ein Verfahren zum Verfestigen der Oberflächen von körnigen Adsorbentien, bei denen die Adsorbentien mit einer kationischen wäßrigen Polymerlösung imprägniert und dann mit einer anionischen wäßrigen Dispersion eines Polymeren mit einem Erweichungspunkt von 60 bis 150 °C behandelt und zusammen getrocknet werden.

EP 0 299 367 A1

EP 0 299 367 A1

## Verfahren zum Verfestigen der Oberflächen von körnigen Adsorbentien

Adsorbentien, wie z.B. Aktivkohlen, die meist in körniger Form bei technischen Adsorbtionsverfahren eingesetzt werden, neigen in der Regel zum Stauben, insbesondere bei mechanischer Beanspruchung, wie sie beispielsweise schon beim Einfüllen in Adsorbtionseinrichtungen oder vor allem beim Einsatz in einer bewegten Schicht auftreten. Der bei einer derartigen mechanischen Beanspruchung auftretende Abrieb kann bei weiteren Verfahrensstufen stark stören, insbesondere kann ein derartiger Abrieb den Einsatz vieler körniger Adsorbentien in einer bewegten Schicht praktisch unmöglich machen. Zur Vermeidung dieser Nachteile wurde schon gemäß der US-PS 4 535 005 ein Verfahren zum Verfestigen der Oberflächen der körnigen Adsorbentien entwickelt, bei dem man die Adsorbentien zunächst zu 25 bis 90 % mit Wasser abdeckt, sie dann bei Temperatur erhitzt, bei der das aufgenommene Wasser verdampft und sie, solange aufgenommenes Wasser verdampft, unter Mischen mit wäßrigen Dispersionen von selbstvernetzten Copolymerisaten behandelt und anschließend die Copolymerisate unter Erhitzen auf 110 bis 180° C vernetzt. Dieses Verfahren ist jedoch verhältnismäßig energieaufwendig und zeigt zudem die Nachteile, daß man die Adsorbentien vorher in Wasser taucht und mit speziell thermosensibel eingestellten Polymerdispersionen mit reaktiven Gruppen arbeitet.

Aus der US-PS 4 535 004 ist zudem ein Verfahren zur Verfestigung der Oberflächen von körnigen Adsorbentien bekannt, bei dem man die Adsorbentien, die zunächst praktisch kein Wasser enthalten, mit einer wäßrigen Suspension von fadenförmigen Gebilden aus selbstvernetzten Copolymerisaten behandelt, wobei sich die fadenförmigen Gebilde auf den Oberflächen der Adsorbentien abscheiden, das von den Adsorbentien aufgenommene Wasser verdampft und die mit den fadenförmigen Gebilden bedeckten Adsorbentien auf Temperaturen von 110 bis 180° C erhitzt, wobei die Copolymerisate vernetzen. Dieses gleichfalls energieaufwendige Verfahren hat zudem den Nachteil, daß beim Mischen in einer laufenden Trommel die fadenförmigen Gebilde teilweise von den Adsorbentien abgerieben werden und dadurch ungleichmäßig beschichtet sind.

Es wurde nun gefunden, daß man die Oberflächen von körnigen Adsorbentien durch Beschichten mit einer wäßrigen Polymer-Dispersion mit Vorteil verfestigen kann, indem man die trockenen Adsorbentien mit einer kationischen wäßrigen Polymer-Lösung imprägniert, überschüssige Polymerlösung abtrennt, gegebenenfalls trocknet und die Oberfläche der imprägnierten Adsorbentien durch Behandeln mit einer anionischen wäßrigen Dispersion eines Polymeren mit einen Erweichungspunkt von 60 bis 150° C beschichtet und die beschichteten Adsorbentien in an sich gut üblicher Weise trocknet.

Körnige Adsorbentien, die technisch von Bedeutung sind, deren Oberflächen erfindungsmäßig verfestigt werden können, sind beispielsweise kohlenstoffhaltige Adsorbentien, wie Aktivkohle, Aktivkoks und Kohlenstoffmolekularsiebe, Aktivtonerde, die z.B. durch Entwässern und Calcinieren von Aluminiumhydroxyde erhalten werden, Kieselgele und Molekularsiebzolithe, wie sich von natürlichen und synthetischen, hydrolysierten Aluminosilikaten ein- oder mehrwertiger Basen ableitet. Von den körnigen Adsorbentien werden vorzugsweise Aktivkohlen verwendet. Die innere Oberfläche der Aktivkohlen liegt im allgemeinen zwischen 400 und 1600 m² je Gramm, während die innere Oberfläche der Adsorbentien im Bereich von 100 bis 1000 m² je Gramm liegt. Im allgemeinen haben die körnigen Adsorbentien einen mittleren Teilchendurchmesser von 0.3 bis 9, insbesondere von 2 bis 5 mm. Bei dem neuen Verfahren werden zunächst die Adsorbentien, die nicht vorgetrocknet zu sein brauchen, mit einer kationischen wäßrigen Polymer-Lösung imprägniert, z.B. durch Besprühen oder durch Eintragen in die kationischen Polymer-Lösung und anschließendes Abtrennen von überschüssiger Polymer-Lösung. Als kationisches Polymere kommen vor allem Ethyleniminpolymerisate, z.B. Polyethylenimin in Frage, die meist Molekulargewichte (bestimmt nach der Lichtstreumethode) von $0,6.10^5$ bis $1,6.10^6$, insbesondere von $1,8.10^5$ bis $1,4.10^6$ haben. Derartige Ethyleniminpolymerisate sind im Handel erhältlich. Sie werden für das neue Verfahren meist in Form einer 0,2 bis 10%igen, vorzugsweise in Form einer 0,4 bis 0,8%igen wäßrigen Lösung eingesetzt. Die beim Imprägnieren der körnigen Adsorbentien gegebenenfalls vorhandene überschüssige kationische Polymer-Lösung kann z.B. durch Filtrieren oder Abschleudern abgetrennt werden.

Die imprägnierten Adsorbentien können, falls gewünscht, zu einer Zwischenlagerung gegebenenfalls getrocknet oder gleich nach der Imprägnierung in einem feuchten Zustand mit einer anionischen wäßrigen Polymer-Dispersion behandelt werden. Die wäßrige Polymer-Dispersion hat im allgemeinen eine Konzentration von 1 bis 50, vorzugsweise von 5 bis 20 Gew.% und die Polymeren weisen einen Erweichungspunkt (gemessen nach DIN 53460) von bis 150, vorzugsweise von 80 bis 120° C auf. Das Behandeln der imprägnierten Adsorbentien mit der anionischen Polymer-Dispersion kann z.B. durch Besprühen oder Tauchen der Adsorbentien erfolgen und das Gewichtsverhältnis von imprägnierter Aktivkohle zu anionisch dispergiertem Polymerisat liegt im allgemeinen im Bereich von 99,5 bis 90 zu 0.5 bis 10, vorzugsweise im

2

Bereich von 99,6 bis 97 zu 0,4 bis 3. Die Polymerisate der anionischen wäßrigen Polymerdispersion haben meist überwiegende Mengen Styrol und/oder Acrylnitril sowie gegebenenfalls zusätzlich meist in Mengen von 1 bis 8, insbesondere von 2 bis 6 Gew.%, bezogen auf die Copolymerisate $\alpha,\beta$-monoolefinisch ungesättigte, 3 bis 5 C-Atome enthaltende Mono- und/oder Dicarbonsäure, wie besonders Acrylsäure, Methacrylsäure oder Itakonsäure sowie ferner gegebenenfalls 0,2-3 Gew.% Amide derartiger Carbonsäuren, wie Acrylsäureamid, einpolymerisiert. Als Comonomere kommen auch in Mengen von meist nur bis zu 30 Gew.% Acryl- und Methacrylester 1 bis 4 C-Atome enthaltende Alkanole, Methacrylsäuremethylester, Acrylsäuremethylester, Acrylsäureethylester und Acrylsäurebutylester sowie ferner Butadien in Frage. Die anionisch dispergierten Polymeren können sich auch von überwiegenden Mengen Methacrylester ableiten, wobei als Comonomere in geringen Mengen Acryl- oder Methacrylsäure sowie Ethylacrylat und/oder n-Butylacrylat in Frage kommen. Bewährt haben sich z.B.

1. eine 40%ige wäßrige Dispersion eines Copolymerisates aus 75 Gew.% Acrylnitril, 28 Gew.% n-Butylacrylat und 5 % Acrylsäure mit einem Erweichungspunkt von 110°C

2. eine 50%ige wäßrige Dispersion eines Copolymerisats aus 80 Gew.% Styrol, 15 Gew.% Acrylnitril und 5 Gew.% Acrylsäure mit einem Erweichungspunkt von 84°C

3. eine 50%ige wäßrige Polystyrol-Dispersion mit einem Erweichungspunkt von 104°C

4. eine 50%ige wäßrige Dispersion eines Copolymerisats aus 87 % Styrol, 10 % Butadien, 2 % Acrylsäure und 1 % Methacrylamid und mit einem Erweichungspunkt von 79°C

5. eine 50%ige wäßrige Dispersion eines Copolymerisats aus 71,3 % Styrol, 14,5 Butadien, 71,3 % Styrol, 14,5 % Butadien, 10 % Acrylnitril, 3,9 % Acrylsäure und 0,3 % Methacrylamid mit einem Erweichungspunkt von 109°C.

Beim Imprägnieren der Absorbentien beträgt das Gewichtsverhältnis von Adsorben, z.B. Aktivkohle (kationischen), Polymerisat meist 97 bis 99,8 zu 3 bis 0,02, vorzugsweise 99,6 bis 99 zu 0,4 bis 1 Gew.%.

Für die folgenden Beispiele wird zum Imprägnieren von Aktivkohle eine 0,5%ige wäßrige Polyethylenimin-Lösung (Molekulargewicht $1.10^5$) und zum Beschichten der imprägnierten Aktivkohlen, die als Dispersionen 1 bis 5 bezeichneten 10%igen anionischen Polymer-Dispersionen verwendet. Die darin angegebenen Prozente sind Gewichtsprozente.

Beispiele 1 bis 5

Handelsübliche Aktivkohlen mit den in der folgenden Tabelle angegebenen Eigenschaften werden in den dort angegebenen Mengenverhältnissen mit der Polyethylenimin-Lösung imprägniert, in dem die Aktivkohlen 30 Minuten mit überschüssiger Polyethyleniminlösung in einen Behälter leicht gerührt wurden. Man filtriert die imprägnierte Aktivkohle ab, schleudert restliche Polyethyleniminlösung ab und taucht die imprägnierten Aktivkohlen in die 10%igen wäßrigen anionischen Polymeridispersionen 1 bis 5 ein. Nach mehrmaligem Umrühren werden die nunmehr mit den Polymerisaten beschichteten Aktivkohlen abfiltriert und jeweils bei 180°C getrocknet. Das nach dem Trocknen durch Abwiegen der beschichteten Aktivkohlen bestimmte Gewichtsverhältnis von Polymerisat zu imprägnierter Aktivkohle ist gleichfalls in Tabelle 1 aufgeführt.

3

Tabelle 1

| Nr. | Aktivkohle | | Imprägnierung | | Beschichtung | |
| | Abmessungen | Innere Oberfläche $[m^2/g]$ | Polyethylenimin-Lösung | Gewichtsverhältnis Polyethylenimin zu Aktivkohle | Polymerdispersion Nr. | Gewichtsverhältnis Polymerisat zu Aktivkohle |
|---|---|---|---|---|---|---|
| 1 | $\varnothing$ = 3 mm L = 8-10 mm | 700 | | 98:0,5 | 1 | 98,5:1,5 |
| 2 | $\varnothing$ = 4 mm L = 5-7 | 1500 | | 99:0,5 | 2 | 99,5:0,5 |
| 3 | $\varnothing$ = 4 mm L = 6-8 mm | 1000 | | 99:0,5 | 3 | 99,5:0,5 |
| 4 | $\varnothing$ = 4 mm L = 6-8 | 1000 | | 99:0,5 | 4 | 99,5:0,5 |
| 5 | $\varnothing$ = 4 mm L = 5-7 | 1000 | | 98:0,5 | 5 | 98,5:1,5 |

Bem.: $\varnothing$ = mittlerer Durchmesser L = mittlere Länge

L = mittlere Länge

EP 0 299 367 A1

Man erhält auf diese Weise abriebfeste, mit einem porösen Polymerfilm überzogene Aktivkohlen. deren Adsorbtionseigenschaften im wesentlichen erhalten sind, wie sich aus der im folgenden angegebenen

Prüfung der körnigen beschichteten Aktivkohlen

ergibt. Dabei ˙wurde der Abriebverlust bestimmt, indem man jeweils 50 g der Aktivkohle mit Wasserdampf solange behandelt bis die Aktivkohlen keine Feuchtigkeit mehr aufnehmen, indem man die Aktivkohlen in einen im Rollgefäß eingebautem Siebzylinder 72 Stunden in luftdicht verschlossenem Zustand auf einem Rollstuhl laufen läßt und danach die im Siebzylinder verbleibende Aktivkohle zurückwiegt und die Gewichtsdifferenz zwischen Einwaage und Zurückwaage in Gewichtsprozent bestimmt. Die dabei erhaltenen Werte sind in der folgenden Tabelle 2 zusammengestellt.

Die Adsorbtionsfähigkeit der beschichteten und unbeschichteten Aktivkohlen wird geprüft, indem man zu untersuchenden Proben in eine Absorptionsvorrichtung einfüllt und bis zur Endsättigung der Aktivkohlen mit Toluol bei Raumtemperatur ein Polyol-Stickstoffgemisch mit 1650 ppm Toluol hindurchleitet. Die so gemessenen Adsorbtionsfähigkeiten sind in der folgenden Tabelle 2 zusammengestellt.

Tabelle 2

| Beschichtete Aktivkohle Beispiel | Adsorptionsfähigkeit [%] | | Abriebverlust [%] nach 72 Stunden | |
|---|---|---|---|---|
| | der unbehandelten Aktivkohle | der beschichteten Activkohle | der unbehandelten Aktivkohle | der beschichteten Activkohle |
| 1 | 38 | 36 | 0,30 | 0,04 |
| 2 | 45 | 42 | 3,00 | 0,60 |
| 3 | 36 | 34 | 2,60 | 0,60 |
| 4 | 37 | 35 | 3,00 | 0,90 |
| 5 | 34 | 32 | 3,00 | 0,30 |

**Ansprüche**

1. Verfahren zum Verfestigen der Oberflächen von körnigen Adsorbentien durch Beschichten mit einer wäßrigen Polymer-Dispersion, dadurch gekennzeichnet, daß man trockene Adsorbentien mit einer kationischen wäßrigen Polymer-Lösung imprägniert, überschüssige Polymerlösung abtrennt, gegebenenfalls trocknet und die Oberfläche der imprägnierten Adsorbentien durch Behandeln mit einer anionischen wäßrigen Dispersion eines Polymeren mit einem Erweichungspunkt von 60 bis 150 °C beschichtet und die beschichteten Adsorbentien in an sich üblicher Weise trocknet.

2. Verfahren zum Verfestigen der Oberflächen von körnigen Adsorbentien nach Anspruch 1, dadurch gekennzeichnet, daß man zum Imprägnieren der Adsorbentien eine 0,2 bis 10%ige wäßrige Polyethylenimin-Lösung verwendet.

3. Verfahren zum Verfestigen der Oberflächen von körnigen Adsorbentien nach Anspruch 1 oder 2, dadurch gekennzeichnet, daß man zum Beschichten der imprägnierten Adsorbentien eine 5 bis 20%ige wäßrige anionischne Dispersion eines Polymeren mit einem Erweichungspunkt von 60 bis 100 °C verwendet.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 119 925 (CALGON CARBON CO.)<br>* Seite 1, Zeile 1 - Seite 17, Zeile 15 * <br><br>--- | 1 | B 01 J 20/32<br>B 01 D 53/02 |
| A | EP-A-0 069 435 (MITSUBISHI RAYON CO.)<br><br>--- | | |
| A | EP-A-0 072 569 (KURARAY CO., LTD)<br><br>----- | | |

RECHERCHIERTE SACHGEBIETE (Int. Cl.4)

B 01 J
B 01 D

Der vorliegende Recherchenbericht wurde für alle Patentansprüche erstellt

| Recherchenort | Abschlußdatum der Recherche | Prüfer |
|---|---|---|
| DEN HAAG | 30-08-1988 | PYFFEROEN K. |